Europäisches Patentamt

European Patent Office

Office européen des brevets

(11) Veröffentlichungsnummer: **0 374 082 A2**

## (12) EUROPÄISCHE PATENTANMELDUNG

(21) Anmeldenummer: 89710075.6

(22) Anmeldetag: 06.11.89

(51) Int. Cl.5: **B29B 13/10, B29C 47/10**

(30) Priorität: 12.12.88 DE 3841752

(43) Veröffentlichungstag der Anmeldung:
20.06.90 Patentblatt 90/25

(84) Benannte Vertragsstaaten:
AT BE FR GB IT NL

(71) Anmelder: **Paul Troester Maschinenfabrik**
**Am Brabrinke 2-4**
**D-3000 Hannover 89(DE)**

(72) Erfinder: **Baumgarten, Wilfried, Dipl.-Ing.**
**Stettiner Strasse 17**
**D-3017 Pattensen(DE)**

(74) Vertreter: **Junius, Walther, Dr.**
**Wolfstrasse 24**
**D-3000 Hannover-Waldheim(DE)**

(54) **Verfahren und Vorrichtung zum Beschicken von kalt mit Kautschuk- und/oder Kunststoffmischungen beschickbaren Schneckenextrudern.**

(57) Die Erfindung betrifft ein Verfahren und eine Vorrichtung zum Beschicken von kalt mit Kautschuk- und/oder Kunststoffmischungen beschickbaren Schneckenextrudern, bei dem die dem Extruder zuzuführenden Mischungen in Form von in zickzackförmiger Anordnung auf Paletten liegenden breiten Streifen angeliefert werden und über Transportbänder dem Schneckenextruder zugeführt werden. Es ist die Aufgabe der Erfindung
- eine erleichterte und vergleichmäßigte Beschickung, insbesondere wenn das Material mehrerer Streifen gleichzeitig zugeführt werden soll
- eine erleichterte Metall- und Fremdkörperabscheidung
- eine Vergleichmäßigung der Materialzufuhr
- eine erleichterte Bedienung
- und eine Materialeinsparung bei der Metall- und Fremdkörperabscheidung
zu erreichen. Die Erfindung besteht darin, daß die Streifen nach ihrer Abnahme von der Palette zu Schnitzeln oder Brocken zerkleinert werden, dann einem Magnetabscheider zugeführt werden, und dann auf ihrem Weg zum Extruder an einem Metallsuch- und Abscheidegerät vorbeigeführt werden.

FIG.1

## Verfahren und Vorrichtung zum Beschicken von kalt mit Kautschuk- und/oder Kunststoffmischungen beschickbaren Schneckenextrudern

Die Erfindung betrifft ein Verfahren und eine Vorrichtung zum Beschicken von kalt mit Kautschuk- und/oder Kunststoffmischungen beschickbaren Schneckenextrudern, bei dem die dem Extruder zuzuführenden Mischungen in Form von in zickzackförmiger Anordnung auf Paletten liegenden breiten Streifen angeliefert werden und über Transportmittel dem Schneckenextruder zugeführt werden.

Bei der Beschickung von Schneckenextrudern mit Kautschukmischungen und/oder thermoplastischen Massen kommt es auf eine gute Kontinuität der Materialzusammensetzung und der Beschickung an, um optimale Ergebnisse zu erzielen. In den meisten Fällen werden die zu verarbeitenden Mischungen in Form von langen Streifen, die Felle genannt werden, auf Paletten liegend angeliefert. Dabei besteht neben der uralten Forderung ,der gleichmäßigen Fütterung in neuerer Zeit noch die Notwendigkeit der wirtschaftlichen weitgehend automatisierten Arbeitsweise und die in den letzten dreißig Jahren geübte Praxis, aus Gründen der besseren Produkt-Homogenität die Mischungsfelle zu verschneiden, d.h. zwei oder mehrere Felle gleichzeitig einzuspeisen, wodurch bei der kontinuierlichen Ausformung gewisse unvermeidliche Mischungs-Inhomogenitäten verschwinden.

Früher erfolgte die Fellbeschickung von Hand. Das war bei entsprechend geschultem Bedienungsperson kein Problem. Mit der Entwicklung großer Schneckenextruder für Kaltbeschickung mit Durchsatzleistungen von mehreren t/h wurde diese Arbeit jedoch so schwer und aufwendig, daß man zur maschinellen Beschickung überging. Um diese zu realisieren, wurden zunächst die Mischungsfelle, die bis dahin meist in geschnittener Form vorlagen, im Zickzack auf Paletten liegend an die Extruder angeliefert, da eine kontinuierliche automatische Zuführung der geschnittenen Mischungsfelle in den Extruder nicht möglich war. Bei den im Zickzack liegenden Mischungsfellen brauchten nur die Fellanfänge von Hand oder mittels speziell entwickelter Hilfsvorrichtungen in das Beschickungsgerät oder in den Extrudertrichter direkt eingegeben zu werden, danach lief das Mischungsfell, gegebenenfalls auch zwei oder mehrere Mischungsfelle, automatisch weiter, bis die Palette entleert war. Voraussetzung hierbei war auch, daß der oder die Mischungsstreifen im Gesamtquerschnitt möglichst gut auf die optimale Materialaufnahme durch den Extruder abgestimmt waren. Eine eventuell zu geringe Fütterung durch zu kleinen Streifenquerschnitt bringt bei dieser Methode eine unzureichend gefüllte Schnecke, was sich nachteilig auf die Plastifizierwirkung des Extruders auswirken kann, eine deutliche Minderleistung. Ein zu großer Fellfütter-Querschnitt dagegen hat eine Trichterverstopfung mit Beschickungs störung oder sogar Beschickungsunterbrechung zur Folge.

Ein Problem bei der Beschickung von Schneckenextrudern mit diesen Materialstreifen, diesen Mischungsfellen, besteht in der Entfernung von metallischen Fremdkörpern, die unerwünscht und unbeobachtet in der Mischung enthalten sein können. Man wendet daher bei der Beschickung des Schneckenextruders mit Materialstreifen Metallsuchgeräte und automatische Ausschneidevorrichtungen an, welche zwei Schnitte durch den Materialstreifen ausführen und das zwischen den beiden Schnitten liegende, den Fremdkörper enthaltende Stück des Materialstreifens auswerfen, damit die Fremdkörper nicht den Schneckenextruder gefährden und das ausgeformte Produkt beeinträchtigen. Der hierbei zu treibende Aufwand ist beträchtlich und beinhaltet die Gefahr von Produktionsstörungen und nachteiliger Beschickungsungleichmäßigkeiten. Denn ein auf seiner Transportbahn geschnittenes Fell muß vor dem Erreichen des Trichters des Schneckenextruders wieder zusammengefügt werden, wenn die Beschickung gleichmäßig erfolgen soll.

Manche dieser Probleme hat man bei der Beschickung eines Schneckenextruders mit Granulat nicht. Der Materialstrom läßt sich bei der Verwendung von Granulat besser vergleichmäßigen, jedoch müssen Fremdkörper vor der Granuliervorrichtung entfernt werden, damit sie die Granuliervorrichtung nicht beschädigen. Die Verwendung von Granulat macht jedoch die Verwendung von Puder erforderlich, damit die Granülen nicht aneinander anbacken und die Transportwege verstopfen.

Die Erfindung vermeidet die Nachteile des Standes der Technik. Es ist die Aufgabe der Erfindung
- eine erleichterte und vergleichmäßigte Beschickung, insbesondere wenn das Material mehrerer Streifen gleichzeitig zugeführt werden soll
- eine erleichterte Metall- und Fremdkörperabscheidung
- eine Vergleichmäßigung der Materialzufuhr
- eine erleichterte Bedienung
- und eine Materialeinsparung bei der Metall- und Fremdkörperabscheidung
zu erreichen.

Die Erfindung besteht darin, daß die Streifen nach ihrer Abnahme von der Palette zu Schnitzeln oder Brocken zerkleinert werden, und dann auf ihrem Weg zum Extruder an einem Metallsuch- und Abscheidegerät vorbeigeführt werden, wobei mindestens eine am Anfang der Transportstrecke angeordnete Zerkleinerungsvorrichtung und ein der Zerkleinerungsvorrichtung nachgeschalteter Magnetabscheider in Anwendung gebracht werden.

Durch das Zerkleinern des bzw. der Materialstreifen zu fingergroßen bis handtellergroßen Materialstücken wird die Beschickung erheblich erleichtert, es ist jetzt nicht mehr darauf zu achten, daß und wie die Materialstreifen in den Trichter des Extruders einlaufen, weil eine Füllung des Trichters mit Materialbrocken auch ohne Bedienung einwandfrei verläuft. Die Metall- und Fremdkörperabscheidung ist wesentlich erleichtert, weil Magnetabscheider in Anwendung gebracht werden können, die bei der Beschickung mit Streifen nicht in Anwendung gebracht werden können, und weil das Auffinden und Abscheiden anderer Fremdkörper bei relativ kleinen Brocken relativ erleichtert ist. So brauchen nicht mehr Schneidevorrichtungen eingesetzt zu werden, die die bis zu 1.200 mm breiten Streifen durchschneiden und das Stück zwischen den beiden Schnitten ausscheiden. Solche ausgeschiedenen Stücke waren bisher sehr groß, wodurch trotz eines kleinen Fremdkörpers relativ viel Material der Produktion entzogen wurde. Insbesondere ist es aber von Vorteil, daß durch die Fremdkörperabscheidevorrichtung zerschnittene Materialstreifen nicht mehr von Hand geführt werden müssen, um den neuen Fellanfang soweit in den Extrudertrichter zu befördern, daß er von der Schnecke erfaßt wird.

Die Anordnung des Magnetabscheiders und die weitere Anordnung eines Metallabscheiders auf dem Weg zwischen der Zerkleinerungsvorrichtung und dem Trichter des Schneckenextruders ist von Vorteil, weil hier mit geringem Aufwand die Fremdkörper entfernt werden können.

Von besonderem Vorteil ist die Möglichkeit, hinter der Zerkleinerungsanlage oder zwischen zwei Transportbändern Schnitzel oder Brocken in einem Zwischenspeicher zu bevorraten, um somit immer einen gleichmäßigen Materialfluß gewährleisten zu können, welche Störungen auch immer bei vorgeschalteten Anlagenteilen entstehen.

Ein weiterer Vorteil besteht darin, daß man nicht mehr so breite Fördervorrichtungen wie bei der ursprünglichen Fellbreite benötigt, weil die Möglichkeit besteht, eine Vorrichtung zum Einengen des Stromes der Brocken in Anwendung zu bringen, eine solche Vorrichtung kann beispielsweise durch den Ausgangstrichter des Zwischenspeichers gebildet sein.

Die gleichmäßige Beschickung erreicht man zweckmäßigerweise dadurch, daß man den Füllstand im Einzugstrichter des Schneckenextruders mißt und die Transportgeschwindigkeit der Transportbänder entsprechend der Füllstandsanzeige einstellt.

Verwendet man mehrere Streifen gleichzeitig, um aus Gründen der besseren Produkt-Homogenität die Streifen zu verschneiden, wodurch bei der kontinuierlichen Ausformung gewisse unvermeidliche Mischungs-Inhomogenitäten verschwinden, kann man mehrere Streifen in einer Zerkleinerungsvorrichtung gemeinsam zerkleinern. Dadurch ist der maschinelle Aufwand gering.

Leichter zu bedienen ist die Anlage jedoch dann, wenn man in mehreren Zerkleinerungsvorrichtungen je einen Streifen zerkleinert und die erhaltenen Schnitzel und/oder Brocken einem gemeinsamen Förderer oder einem gemeinsamen Zwischenspeicher zuführt. Eine Bedienungsperson kann dann leicht mehrere Zerkleinerungsvorrichtungen gemeinsam bedienen, der Zwischenspeicher trägt immer dafür Sorge, daß, wenn zur gleichen Zeit die Felle aus zwei Zerkleinerungsvorrichtungen ausgelaufen sind und von der Bedienungsperson nur eine Zerkleinerungsvorrichtung mit einem neuen Fell versehen werden kann, ausreichend Material für die Extruderbeschickung zur Verfügung steht.

Diese Zerkleinerung in finger- bis handtellergroße Schnitzel und/oder Brocken hat nicht nur den Vorteil, daß die Metall- und Fremdkörperabscheidung hinter der Zerkleinerungsvorrichtung ausgeführt werden kann, sondern auch den Vorteil, daß man die Abscheidung im freien Fall der Schnitzel oder Brocken vornehmen kann und dabei pneumatische Auswerfvorrichtungen zum Einsatz bringen kann, die aus einer Düse einen Druckluftstrom austreten lassen, sobald ein Fremdkörper vom Suchgerät angezeigt ist, und die den Fremdkörper enthaltenden Brocken dann zur Seite aus der durch die Schwerkraft vorgezeichneten Bahn auswerfen.

Das Wesen der Erfindung ist nachstehend anhand von zwei in der Zeichnung schematisch dargestellten Ausführungsbeispielen näher erläutert. Es zeigen:

Fig. 1 eine Seitenansicht einer Anlage, bei der drei Mischungsfelle gleichzeitig einer gemeinsamen Zerkleinerungsvorrichtung zugeführt werden,

Fig. 2 eine Transportvorrichtung für mit Mischungsfellen belegte Paletten zur Abnahmevorrichtung,

Fig. 3 eine Ansicht von oben auf die Anlage der Fig. 1,

Fig. 4 eine Seitenansicht einer Anlage mit drei Zerkleinerungsvorrichtungen,

Fig. 5 eine Ansicht von oben auf die Anlage der Fig. 4.

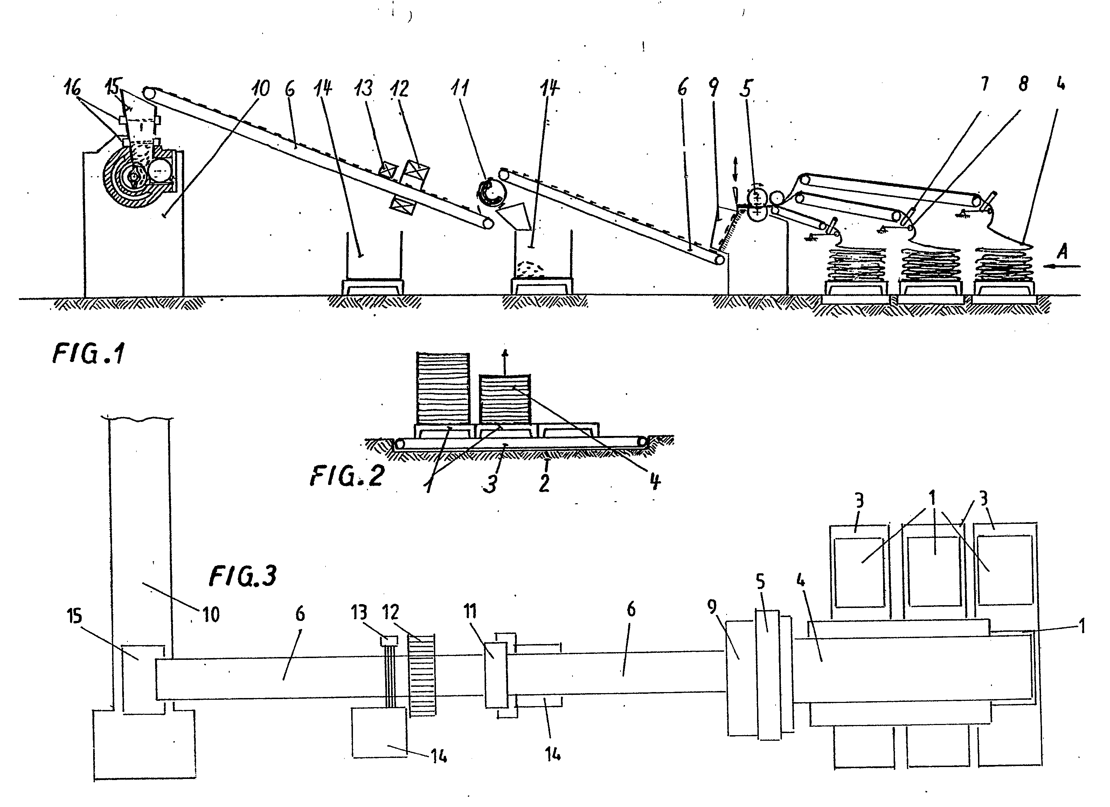

Im Ausführungsbeispiel der Fig. 1 bis 3 werden Paletten 1 mit im Zickzack abgelegten Materialstreifen 4, sogenannten Mischungsfellen, auf speziell ausgebildeten Stellplätzen 2 angeliefert. Diese Stellplätze 2 sind mit Transportvorrichtungen 3 ausgestattet, auf die die Paletten 1 mit den Materialstreifen 4 aufgestellt werden, von wo die Materialstreifen über Fördervorrichtungen 17 zur gemeinsamen Zerkleinerungsvorrichtung 5 laufen. Diese Zerkleinerungsvorrichtung 5 zerkleinert die einlaufenden Materialstreifen 4 in einzelne Stücke von etwa Nuß-bis Fingergröße, maximal etwa Handtellergröße, in der Form von Schnitzeln und/oder Brocken. Diese werden dann über zwei Fördervorrichtungen 6 dem Trichter 15 des Schneckenextruders 10 zugeführt. Dabei kann der jeweilige Mischungsfellanfang von Hand oder auch mittels einer Hilfsvorrichtung 7 dem Zerkleinerer 5 zugeführt werden. Als besonders praktisch erweist es sich, wenn an jeder Fellzuführung ein Signalgeber 8 installiert wird, der das Ende des Mischungsfelles einer Palette anzeigt, damit auch durch einen eventuell entfernt stehenden Bedienungsmann rechtzeitig für das Verschieben der Paletten und das Nachlegen eines neuen Mischungsfelles von einer frischen, in Bereitschaft stehenden Mischungspalette aus gesorgt werden kann. Dieser Vorgang kann in weiterer Ausbildung der Erfindung auch automatisch durchgeführt werden.

Die Zerkleinerungsvorrichtung 5 läßt die zerkleinerten Brocken und/oder Schnitzel in einen Zwischenspeicher 9 fallen, der zweckmäßigerweise trichterförmig ausgebildet ist, um einerseits einen Zwischenvorrat an Schnitzeln und/oder Brocken zu haben, andererseits den Materialstrom, der aus dem Zerkleinerer 5 kommt und die oft große Breite der Mischungsfelle aufweist, in einen schmaleren Förderstrom umzuformen. Da Mischungsfelle bei ihrer Anlieferung bis etwa 1200 mm breit liegen, läßt sich die Weiterförderung der Brocken und/oder Schnitzel mit einem schmalen Förderer 6 durchaus wirtschaftlicher vornehmen.

Bei dieser Weiterförderung findet die Abscheidung von Fremdkörpern statt. Hinter dem ersten Förderband 6 ist ein walzenförmiger Magnetabscheider 11 angeordnet, dem ein Abstreiftrichter 18 nachgeschaltet ist, der an der Magnetwalze 11 hängende Schnitzel und/oder Brocken abstreift und dem Auffangkasten 14 zuführt, in dem diese mit Eisenteileinschlüssen versehenen Schnitzel oder Brocken aufgefangen werden.

Auf dem weiteren Wege, nämlich am zweiten Förderband 6, ist ein Fremdkörpersuchgerät 12, vorzugsweise ein Metallsuchgerät mit einer von ihm gesteuerten Abscheidevorrichtung 13, angeordnet. Diese Abscheidevorrichtung stößt einzelne, mit Fremdkörpern versehene Schnitzel und/oder Brocken in einen weiteren Auffangkasten 14.

Der Förderer 6 für das zerkleinerte Material, welches dem Schneckenextruder zuzuführen ist, kann ein Gurtförderer, ein Schwingförderer oder ein anderes geeignetes System sein, wobei das Fördersystem in an sich üblicher Weise eine stufenlose Geschwindigkeitsverstellung haben sollte. Dabei ist es in weiterer Ausbildung des Erfindungsgedankens zweckmäßig, den Antrieb des Förderers mit dem des Zerkleinerers zu verbinden oder auch so zu steuern, daß eine gemeinsame Geschwindigkeitsverstellung erfolgt. Auf diese Weise kann die Durchsatzleistung der gesamten Mischungszuführung dem Bedarf des Schneckenextruders optimal angepaßt werden. Dabei kann auch eine Kontrollvorrichtung 16 am Schnekkenextruder-Trichter angewendet werden, mit der erreicht wird, daß der Extrudertrichter 15 immer optimal gefüllt ist, und zwar unabhängig von der Verarbeitungsgeschwindigkeit des Extruders selbst, aber insbesondere auch zur Eliminierung von evtl. Förderunterschieden der ganzen Beschickungsanlage, welche z.B. durch Ausscheiden von metallhaltigen Teilen aus dem Massestrom, wie oben beschrieben, entstehen können oder durch kleine oder große Störungen der Gleichmäßigkeit, wenn wie oben geschildert, eine Mischungspalette geleert ist und ein neues Mischungsfell angelegt werden muß. Durch eine Geschwindigkeitsverstellung: "Schneller - Langsamer" läßt sich jede der geschilderten Ungleichmäßigkeiten problemlos ausregeln, so daß am Schneckeneinzug des Extruders die erwünschten optimalen Fütterbedingungen gewährleistet sind.

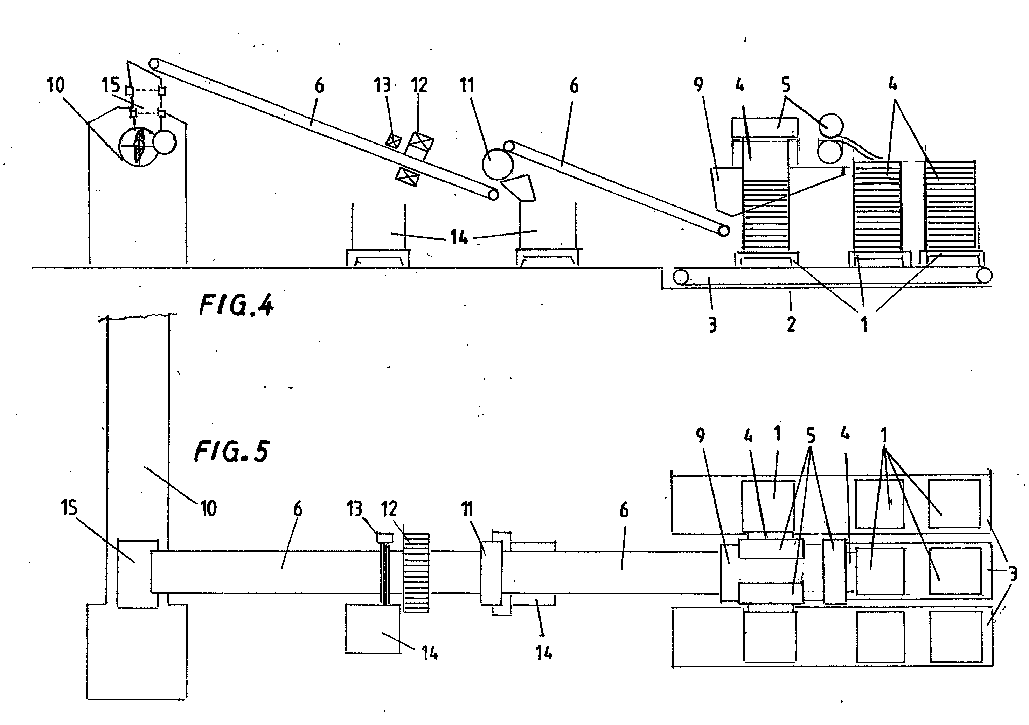

Im Ausführungsbeispiel der Fig. 4 und 5 sind drei Zerkleinerungsvorrichtungen 5A, 5B, 5C vorgesehen, die Materialstreifen 4 von drei verschiedenen Paletten 1 einzeln zerkleinern und einem gemeinsamen Zwischenspeicher 9 zuführen. Da in jede Zerkleinerungsvorrichtung nur ein einziges Fell einzuführen ist, ist dieses eine Erleichterung für die Bedienungsperson, die alle drei Zerkleinerungsvorrichtungen gemeinsam bedient.

Die Fremdkörperabscheidung mittels des Metallsuchgerätes 12 und der Abscheidevorrichtung 13 erfolgt hier im freien Fall, was den Vorteil hat, daß als Abscheidevorrichtung 13 Druckluftdüsen verwendet werden können, die von dem Suchgerät 12 gesteuert sind und die mit Metalleinschlüssen versehenen Schnitzel und/oder Brocken aus der durch die Schwerkraft vorgezeichneten vertialen Bahn seitlich in den Abfall-Auffangkasten 14 auswerfen.

Liste der Bezugszeichen:

1 Palette
2 Stellplatz für Paletten
3 Förderer
4 Kautschukmischungsfell
5 Zerkleinerungsvorrichtung
6 Fördervorrichtung
7 Hilfvorrichtung
8 Signalgeber

9 Zwischenspeicher
10 Schneckenextruder
11 Magnetabscheider
12 Metallsuchgerät
13 Abscheidevorrichtung
14 Abfallkasten
15 Trichter
16 Füllstandszeiger
17 Fördervorrichtung
18 Abstreiftrichter

## Ansprüche

1. Vorrichtung zum Beschicken von kalt mit Kautschuk-und/oder Kunststoffmischungen beschickbaren Schneckenextrudern mittels Transportbändern mit in zickzackförmiger Anordnung auf Paletten angelieferten breiten Streifen aus dem zu verarbeitenden Material, gekennzeichnet durch mindestens eine am Anfang der Transportstrecke (6) angeordnete Zerkleinerungsvorrichtung (5) und durch einen der Zerkleinrungsvorrichtung (5) nachgeschalteten Magnetabscheider (11).

2. Vorrichtung nach Anspruch 1, gekennzeichnet durch die Anordnung eines Metallsuchgerätes (12) und eines Metallabscheiders (13) auf dem Weg zwischen der Zerkleinerungsvorrichtung (5) und dem Trichter des Schneckenextruders (10).

3. Vorrichtung nach Anspruch 1, gekennzeichnet durch mindestens einen Zwischenspeicher (9) auf dem Weg zwischen der Zerkleinerungsvorrichtung (5) und dem Schneckenextruder (10).

4. Vorrichtung nach Anspruch 1, gekennzeichnet durch eine Vorrichtung (9) zum Einengen des Stromes der in der Zerkleinerungsvorrichtung (5) erzeugten Schnitzel und Brocken.

5. Vorrichtung nach Anspruch 1, gekennzeichnet durch mehrere, auf eine gemeinsame Fördervorrichtung (6) oder in einen gemeinsamen Zwischenspeicher (9) Schnitzel und/oder Brocken liefernde Zerkleinerungsvorrichtungen (5).

6. Vorrichtung nach Anspruch 1, gekennzeichnet durch eine Steuerungsvorrichtung, welche die Geschwindigkeit der Transportvorrichtung (6) entsprechend einer Füllstandsanzeige im Trichter (15) des Schneckenextruders (10) einstellt.

7. Verfahren zum Beschicken von kalt mit Kautschuk- und/oder Kunststoffmischungen beschickbaren Scheckenextrudern, bei dem die dem Extruder zuzuführenden Mischungen in Form von in zickzack-förmiger Anordnung auf Paletten liegenden breiten Materialstreifen angeliefert werden und über eine Transportvorrichtung dem Schneckenextruder zugeführt werden, dadurch gekennzeichnet, daß die Streifen nach ihrer Abnahme von der Palette zu Schnitzeln oder Brocken zerkleinert werden, dann einem Magnetabscheider zugeführt werden, und dann auf ihrem Weg zum Extruder an einem Metallsuch- und Abscheidegerät vorbeigeführt werden.

8. Verfahren nach Anspruch 7, dadurch gekennzeichnet, daß man hinter der Zerkleinerungsanlage oder zwischen zwei Transportbändern Schnitzel oder Brokken zwischenspeichert.

9. Verfahren nach Anspruch 7, dadurch gekennzeichnet, daß man den Strom der in der Breite der Streifen anfallenden Brocken einengt.

10. Verfahren nach Anspruch 7, dadurch gekennzeichnet, daß man den Füllstand im Eingangtrichter des Schneckenextruders mißt und die Transportgeschwindigkeit der Transportbänder entsprechend der Füllstandsanzeige einstellt.

11. Verfahren nach Anspruch 7, dadurch gekennzeichnet, daß man mehrere Streifen in einer Zerkleinerungsvorrichtung gemeinsam zerkleinert.

12. Verfahren nach Anspruch 7, dadurch gekennzeichnet, daß man in mehreren Zerkleinerungsvorrichtungen je einen Streifen zerkleinert und die erhaltenen Schnitzel und Brocken einem gemeinsamen Förderband zuführt.

13. Verfahren nach Anspruch 7, dadurch gekennzeichnet, daß man die Metallabscheidung im freien Fall der Schnitzel und/oder Brocken vornimmt.

FIG.1

FIG.2

FIG.3

EP 0 374 082 A2

FIG.4

FIG.5